# FASCICULE DE BREVET EUROPEEN

(11) **EP 1 188 684 B1**
(45) Date de publication et mention de la délivrance du brevet: **17.03.2004**
(21) Numéro de dépôt: 00203185.4
(22) Date de dépôt: 15.09.2000
(51) Int. Cl.: B65D 77/30, A47J 31/40

(54) **Elément de recharge en substance alimentaire et dispositif destiné à recevoir un tel élément**
Nachfüllbehälter für Lebensmittel und Vorrichtung zur Aufnahme eines solchen Behälters
Refill container for food product and device for receiving such a container

(43) Date de publication de la demande: 20.03.2002
(73) Titulaire: SOCIETE DES PRODUITS NESTLE S.A., 1800 Vevey (CH)
(72) Inventeur: Riesterer, Alain, 1800 Vevey (CH)
(74) Mandataire: Borne, Patrice Daniel

(56) Documents cités:
- EP-A- 0 387 986
- EP-A- 0 419 290
- EP-A- 1 028 068
- US-A- 4 614 286
- US-A- 5 246 126
- PATENT ABSTRACTS OF JAPAN vol. 007, no. 087 (P-190), 9 avril 1983 (1983-04-09) & JP 58 014865 A (FUJI XEROX KK), 27 janvier 1983 (1983-01-27)

## Description

L'invention se rapporte au domaine des dispositifs de dosage, de distribution et/ou de préparation de produits alimentaires tels que boissons, sauces ou autres produits similaires. L'invention vise plus particulièrement un élément de recharge comprenant une substance alimentaire devant fournir un approvisionnement à de tels dispositifs. L'invention peut faire l'objet de nombreuses applications dans le domaine du service alimentaire ("Foodservice") notamment ayant trait à la distribution de boissons dans les lieux publics ou dans les services de restauration de moyens de transport tels qu'avions ou trains.

L'alimentation en substance alimentaire des appareils de distribution et/ou de préparation de boissons ou autres produits tout préparés, doit être réalisée régulièrement et en quantité suffisante pour pouvoir assurer un service continu et sans interruption au consommateur. En général, l'alimentation des dispositifs se fait manuellement par le remplissage de réservoirs à partir d'une substance alimentaire conditionnée en "vrac" dans des sachets ou boites hermétiques. Cette méthode n'est pas satisfaisante car elle impose des manipulations et du temps nécessaire à l'exécution de ces manipulations. Les manipulations provoquent des salissures avec un risque de perte significative en substance alimentaire notamment lorsque le dispositif est installé dans des conditions instables ou turbulentes comme ce peut être le cas dans un avion.

Il existe des dispositifs conçus pour recevoir des cartouches ou conteneurs remplis de substances pulvérulentes solubles lesquels sont ouverts avant l'introduction dans le dispositif. Le document GB 1 325 478 enseigne, par exemple, un tel principe. Dans ce cas particulier, le conteneur comprend une bande adhésive qui est délaminée avant l'assemblage du conteneur dans le dispositif. L'inconvénient vient de ce que l'opération de rechargement se fait lorsque le conteneur est entièrement ouvert, conduisant ainsi aux même inconvénients que ceux précédemment décrits.

La demande EP 1 028 068, base pour les préambules des revendications 1 et 10, appartenant à la demanderesse propose une solution à ces problèmes qui consiste à prévoir une cartouche de recharge adaptée à un rechargement en substance alimentaire qui soit aisé et rapide sans risque de perte de substance, et le cas échéant, pouvant être utilisée de manière satisfaisante dans un environnement exigeant comme dans un compartiment d'avion. La cartouche comprend un récipient contenant une substance alimentaire et un moyen de fermeture coopérant avec le récipient pour former une enceinte close. Le moyen de fermeture comprend des moyens permettant le détachement au moins partiel du moyen de fermeture sous l'effet de l'introduction de l'élément de recharge dans le dispositif de distribution. En particulier, le moyen de détachement comprend une portion libre munie de moyens d'accrochage mécaniques destinés à s'engager avec au moins une partie de retenue du dispositif, complémentaire du moyen d'accrochage mécanique, de façon à maintenir la portion libre en place dans une configuration rabattue de la partie libre sur le moyen de détachement et, assurer ainsi le détachement au moins partiel du moyen de fermeture par rapport au récipient. Dans ce cas, le moyen de détachement forme ainsi une portion du moyen fermeture ou scellage, qui pend librement en configuration "de repos" et qui est apte à se replier sur le récipient, en configuration d'engagement dans le dispositif.

Un tel système présente de nombreux avantages en terme de commodité à l'utilisation dans la mesure où l'introduction de la cartouche dans le dispositif suffit, essentiellement, à opérer l'ouverture de l'élément de recharge et donc, le rechargement du dispositif.

La présente invention se rapporte aussi à un élément de recharge en substance alimentaire conçu pour libérer son contenu dans un dispositif adapté sans qu'il soit nécessaire de réaliser l'ouverture préalable de l'élément, ni de prévoir de systèmes de découpe intégrés dans le dispositif de réception. La présente invention vise cependant une amélioration du principe de base enseigné selon le document EP 1 028 068.

La présent invention souhaite apporter une plus grande fiabilité et sécurité dans l'opération de rechargement. Ainsi l'un des objets de l'invention est d'assurer une meilleure répartition des forces appliquées pour effectuer l'ouverture de l'élément de recharge de façon à assurer une sécurité d'ouverture optimale en toute circonstance comme, par exemple, pour éviter tout risque de rupture, chiffonnage ou bourrage du moyen de scellage de l'élément de recharge lors de son engagement dans le dispositif.

Un autre objet est de diminuer le risque d'ouverture accidentelle de l'élément de recharge en dehors du dispositif ainsi que la détérioration et/ou l'endommagement partiel ou total des moyens servant à effectuer l'ouverture et/ou le scellage de l'élément. En effet, l'élément de recharge sert de conditionnement pour la substance alimentaire, et doit donc être adapté pour assurer sa conservation dans le temps, de manière hermétique à la vapeur et éventuellement aussi à l'oxygène. Toute rupture intempestive, même minime soit-elle du moyen de scellage, peut avoir pour conséquence de réduire considérablement la conservation de la substance alimentaire. De même en cas d'endommagement des moyens d'ouverture, l'ouverture de l'élément de recharge peut ne plus s'effectuer convenablement et l'élément de recharge peut devenir alors inutilisable.

Un autre objet est de proposer un élément de recharge qui puisse être facilement stocké en nombre, de manière rationnelle, compacte et sans perte de place dans un espace d'encombrement restreint comme un carton, une caisse, un tiroir, etc.

D'autres objets et avantages de l'invention apparaîtront de manière plus détaillée dans le reste de la description.

Selon l'invention, les objets évoqués précédemment sont atteints en réalisant un élément de recharge en substance alimentaire destiné à être inséré dans une zone d'approvisionnement en substance d'un dispositif de dosage, de distribution et/ou de préparation de produits alimentaires ; l'élément de recharge comprenant un récipient pour contenir une quantité de substance alimentaire ; un passage pour libérer la substance ; des bords de l'élément de recharge dont au moins une paire de premiers bords opposés s'étendant selon une direction longitudinale correspondant à la direction d'engagement de l'élément de recharge dans le dispositif de dosage, un moyen de scellage scellé sur les bords du passage pour former une enceinte close ; un moyen de détachement du moyen de scellage ; ledit moyen de détachement comprenant au moins un moyen d'accrochage destiné à s'engager sur un moyen de retenue du dispositif lors de l'engagement de l'élément de recharge dans le dispositif ; le moyen de détachement étant solidaire d'une portion libre du moyen de scellage ; caractérisé en ce que le moyen de détachement comprend des moyens de connexion avec lesdits premiers bords et est ainsi apte à être connecté à l'élément de recharge de façon à être déplaçable en glissement le long desdits premiers bords et provoquer l'ouverture, au moins partielle, du moyen de scellage en réponse à l'engagement de l'élément de recharge dans le dispositif.

Ainsi, une plus grande fiabilité de l'ouverture de l'élément est apportée du fait que le montage en glissement du moyen de détachement a pour effet de répartir de manière équilibrée les forces nécessaires au détachement du moyen de scellage. Le détachement se fait plus régulièrement en minimisant les risques de rupture du moyen de scellage ; ce qui pourrait autrement contrarier l'ouverture nécessaire à libérer la totalité de la substance alimentaire contenue dans le récipient.

Ainsi, le moyen de détachement comprend préférablement des moyens de connexion avec lesdits premiers bords qui sont flexibles de façon à ce que le moyen de détachement puisse être disposé entre une position désengagée et une position de connexion rabattue sur le moyen de scellage formant ainsi la position d'engagement en glissement le long desdits bords de glissement. Une telle configuration a pour avantage de pouvoir mettre en position opérationnelle de glissement le moyen de détachement sur les bords de glissement de l'élément de recharge, à tout moment, par exemple, soit lors de la fabrication de l'élément de recharge, soit juste avant le chargement dans le dispositif destiné à recevoir l'élément de recharge.

Préférablement, les moyens d'accrochage du moyen de détachement, destinés à s'engager dans des moyens de retenue du dispositif, sont arrangés de manière à former au moins une zone de butée s'étendant de manière transversale par rapport à la direction d'engagement de l'élément dans le dispositif. De préférence, la direction d'engagement de l'élément de recharge correspond à la direction longitudinale de l'élément.

Selon l'invention, le moyen de scellage est préférentiellement un film souple scellé sur les bords de l'élément de recharge. Par "scellage", il faut entendre tout moyen de connexion approprié entre le film et les bords ayant pour caractéristique de pouvoir être rompu sous l'effet d'une traction mécanique suffisante. Une telle action s'entend généralement par les termes de "délamination" ou "pelage". Le scellage peut ainsi comprendre un collage, une soudure ou une combinaison de ces deux moyens.

L'invention concerne aussi l'ensemble comprenant un dispositif de dosage, de distribution et/ou de préparation de boissons comprenant une zone d'approvisionnement et au moins un élément de recharge en substance alimentaire destiné à prendre position dans ladite zone ; l'élément comprenant un récipient contenant la substance alimentaire et un film apte à former le fond de l'élément, le film étant assemblé de manière délaminable sur les bords du récipient comprenant des premiers bords s'étendant selon une direction longitudinale I correspondant à la direction d'engagement de l'élément de recharge dans la zone, le film comprenant une portion libre solidaire d'un moyen de détachement ; ledit moyen de détachement comprenant au moins un moyen d'accrochage mécanique ;
la zone d'approvisionnement comprenant un logement de réception de l'élément et au moins un moyen de retenue qui coopère avec le/les moyen(s) d'accrochage au moment de l'introduction de l'élément dans le logement ; caractérisé en ce que,
le moyen de détachement comprend des moyens permettant la connexion du moyen de détachement de manière glissante par rapport aux premiers bords de l'élément et en ce que le moyen de détachement est apte à coulisser le long des bords de sorte que le mouvement d'introduction provoque la délamination au moins partielle du film et libère la substance dans la zone d'approvisionnement.

Certaines caractéristiques et avantages du dispositif peuvent être en partie décrits dans la demande EP 1 028 068.

La description détaillée qui suit est donnée à titre d'exemples non limitatifs dans lesquels :
La figure 1 représente une vue en perspective d'un élément de recharge selon l'invention ;
La figure 2 montre une vue de côté de l'élément de la figure 1 ;
La figure 3 montre un détail selon la coupe A-A de la figure 1 ;
La figure 4 représente une vue de dessus de l'élément de recharge selon l'invention en mode non-rabattu du moyen de détachement ;
La figure 5 montre une vue de côté de la figure 4 ;
La figure 6 montre une perspective de détail de la figure 4 ;
La figure 7 montre une vue schématique de face de l'élément de recharge en position d'engagement dans le dispositif de préparation ou distribution ;
La figure 8 montre en perspective de dessous le principe d'ouverture de l'élément de recharge lors de l'engagement dans le dispositif ;
La figure 9 montre un détail de la figure 7 selon la coupe B-B ;
Les figures 10 à 12 montrent l'opération d'engagement dans le dispositif pour le rechargement en substance à différents stades d'engagement ;
La figure 13 montre une partie de l'élément de recharge lors de la fabrication ;
La figure 14 montre une vue en coupe schématique d'une variante de l'élément de recharge ;
La figure 15 montre une vue en coupe schématique de la variante de l'élément de la figure 14 après introduction dans le dispositif.

L'invention est maintenant décrite en détail par le biais d'exemples en référence aux dessins.

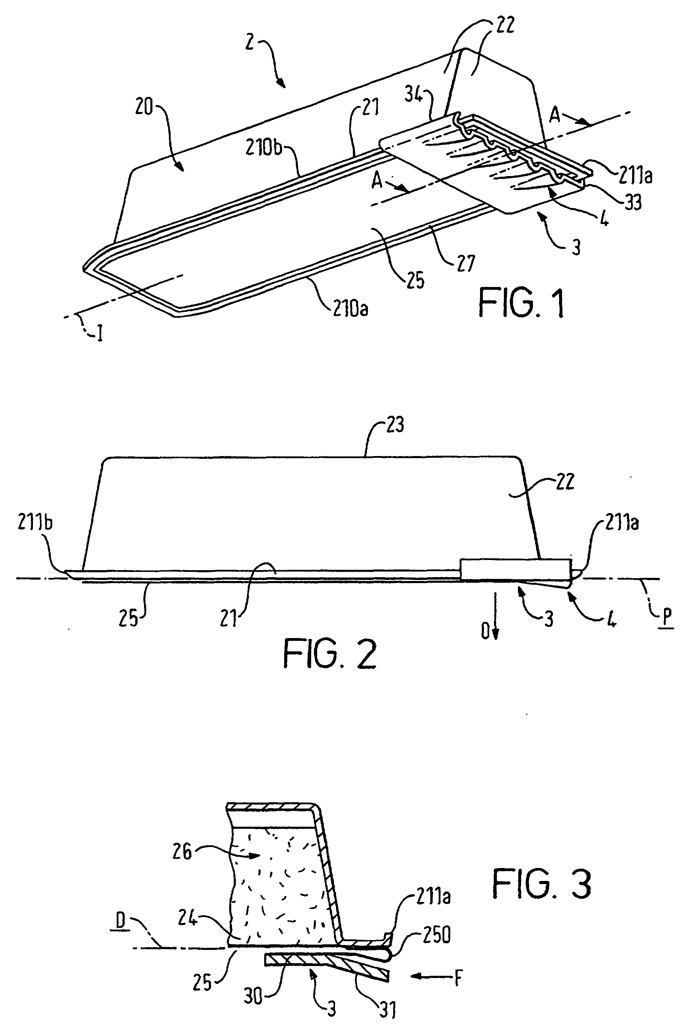

L'élément de recharge 2 selon l'invention tel que représenté aux figures 1 à 3, présente un récipient 20 contenant une quantité prédéterminée en substance alimentaire à recharger. Une telle substance est de préférence une substance pulvérulente du type café, thé ou lait soluble. La capacité du récipient peut être variable et est déterminée en fonction du type de dispositif à recharger et du nombre de doses individuelles à fournir après dosage par un moyen de dosage du dispositif. Par exemple, le récipient peut comprendre une quantité en substance équivalente à un nombre n de dose(s) individuelle(s) ; n pouvant varier entre 1 et 200.

Dans un premier mode, le récipient 20 a la forme d'une barquette allongée s'étendant selon une direction longitudinale I, munie d'un dessus 23, de parois 22 formant les côtés de la barquette qui se prolongent par des bords sensiblement droits 21 par rapport aux parois 22. Les bords 21 forment une portion périphérique sensiblement plane. Les bords 21 délimitent ainsi un passage 24 en l'absence du moyen de scellage. Les bords comportent des premiers bords latéraux opposés 210a, 210b disposés selon la direction longitudinale I et des seconds bords, transversaux, respectivement avant 211a et arrière 211b.

L'ouverture du récipient est recouverte d'un moyen de scellage 25 qui forme le fond de l'élément de recharge et ferme le passage 24 ; de sorte que dans cette configuration, la masse de substance à recharger peut reposer directement sur le moyen de scellage 25. L'assemblage formé par le récipient et le moyen de scellage définit une enceinte hermétiquement close 26. Le terme "hermétiquement" signifie que le passage est sélectif à au moins un élément choisi parmi : l'eau, la vapeur d'eau et l'oxygène.

Les bords 21 du récipient s'étendent sur le pourtour du récipient en formant une base sensiblement plane sensiblement s'inscrivant dans un plan P, ou plan de scellage, de façon à favoriser à la fois le scellage du moyen de scellage 25, de même que l'appui, la stabilité et le guidage de l'élément de recharge dans le dispositif comme il sera expliqué plus en détail après.

De préférence, le moyen de scellage est un film souple scellé sur les bords 21 du récipient en formant un cordon périphérique 27 continu fermé. Il est avantageux de prévoir un moyen de scellage sous forme d'un film thermoscellé sur les bords périphériques du récipient. Le film est choisi de préférence parmi les films résistants à la déchirure ou en tout cas ayant une résistance à la déchirure supérieure à la résistance à la délamination du cordon de scellage lorsqu'une force F est appliquée dans une direction longitudinale parallèle au plan de scellage P comme l'illustre la figure 3.

Le moyen de scellage 25 est solidaire d'un moyen de détachement 3. Pour cela, le moyen de scellage comprend en dehors de la zone de scellage définie par le cordon 27 et à l'avant de l'élément de recharge, une portion 250 qui est repliée ou rabattue sur une portion scellée à l'avant du moyen de scellage.

Le moyen de détachement 3 est monté de manière glissante par rapport aux bords opposés longitudinaux 210a, 210b. Il est préférentiellement constitué d'une pièce sensiblement rigide ou semi-rigide par rapport au film de scellage. Le moyen de détachement possède une surface interne de contact 30 sur laquelle le film de scellage adhère par collage, fusion, soudure ou tout autre moyen. Sur sa face externe 31, le moyen de détachement comprend des moyens d'accrochage mécaniques 4 destinés à coopérer en butée avec des éléments de retenue du dispositif comme il sera expliqué plus loin. Le moyen de détachement 3 possède enfin des moyens de glissement 33, 34 formant, de préférence, des extrémités latérales recourbées en direction des bords du récipient lorsque la portion est en position rabattue sur le moyen de scellage. Ces moyens de glissement 33, 34 assurent la connexion du moyen de détachement avec les bords de glissement 210a, 210b du récipient. Plus particulièrement, ils autorisent le glissement du moyen de détachement selon un plan parallèle au plan de scellage P et en direction longitudinale I qui correspond à la direction d'engagement de l'élément dans le dispositif. De même, ils offrent une certaine résistance au désengagement dans la direction O ; c'est à dire dans la direction normale au plan de scellage P.

Lorsque le moyen de détachement est déplacé dans le sens F tel qu'indiqué à la figure 3, les moyens de glissière empêchent tout déplacement de travers du moyen de détachement par rapport à la direction longitudinale I ; ce qui a pour effet de répartir les forces de délamination de manière quasi-identique de chaque côté des bords latéraux 210a, 210b. Il résulte de cet équilibre des efforts, que la délamination se fait de manière simultanée sur chaque bord et, par conséquent, engendre un moindre risque de déchirement du moyen de scellage.

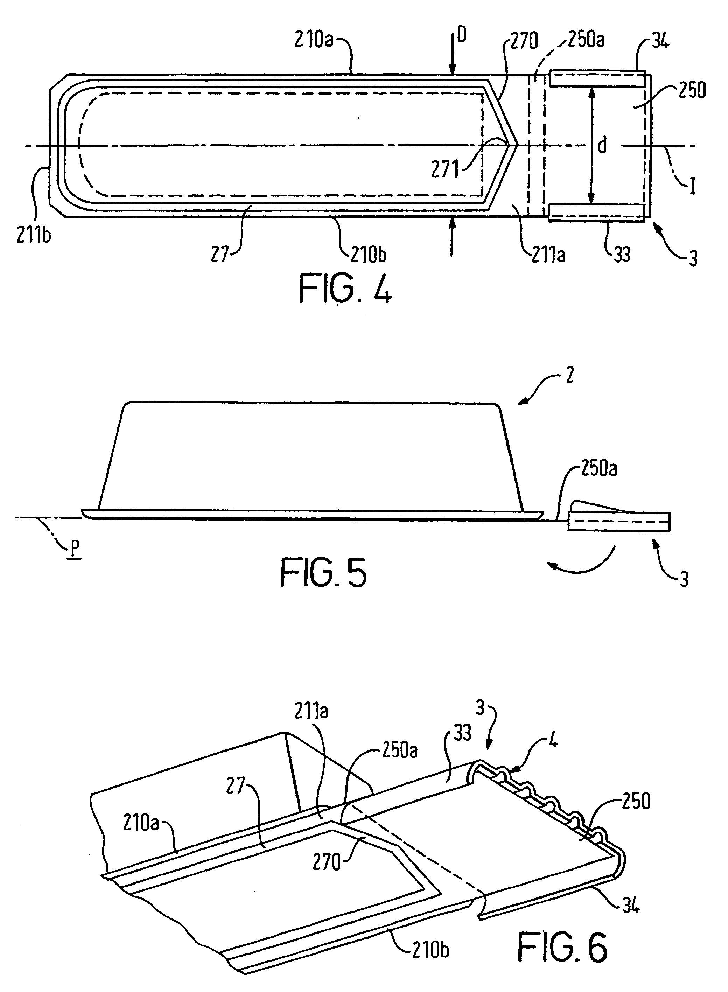

Les figures 4 à 6 montrent une configuration de l'élément de recharge lorsque le moyen de détachement est déployé formant une partie s'étendant au-delà du récipient. Une telle configuration correspond à une configuration de montage de l'élément. Le moyen de détachement 3 est solidarisé au moyen de scellage par la portion 250 laquelle possède au moins une zone (voire une simple ligne) de pliage 250a adjacente au bord avant 211a du récipient. Le moyen de détachement est mis en place par repliement de la partie libre 250 au niveau de la zone de pliage. Pour cela, les moyens de connexion 33, 34 doivent être suffisamment flexibles pour pouvoir s'écarter l'un de l'autre au delà de la distance D correspondant à la largeur des bords 210a, 210b, à partir de leur dimension initiale d. L'engagement se fait donc en exerçant une force suffisante sur les deux côtés du moyen de détachement contre les bords latéraux afin de provoquer l'écartement des portions recourbée, comme par clipsage manuel, par exemple.

Comme le montre la figure 4, le bord avant 211a du récipient comprend une portion de scellage 270 laquelle est soumise aux forces de délamination au tout début du cycle d'introduction de l'élément de recharge. Préférablement, il est prévu que cette portion ait une forme non-linéaire munie d'un apex 271 dirigé vers l'avant et en direction de la portion libre et sensiblement situé dans l'alignement de l'axe longitudinal I. Une telle configuration de la portion avant 270 permet d'offrir une plus faible résistance à la délamination au moment de l'amorce de la délamination par rapport à une portion qui serait linéaire et transversale à l'axe longitudinal I. La portion peut prendre différentes formes telles qu'une forme de V ou U renversé ou autres.

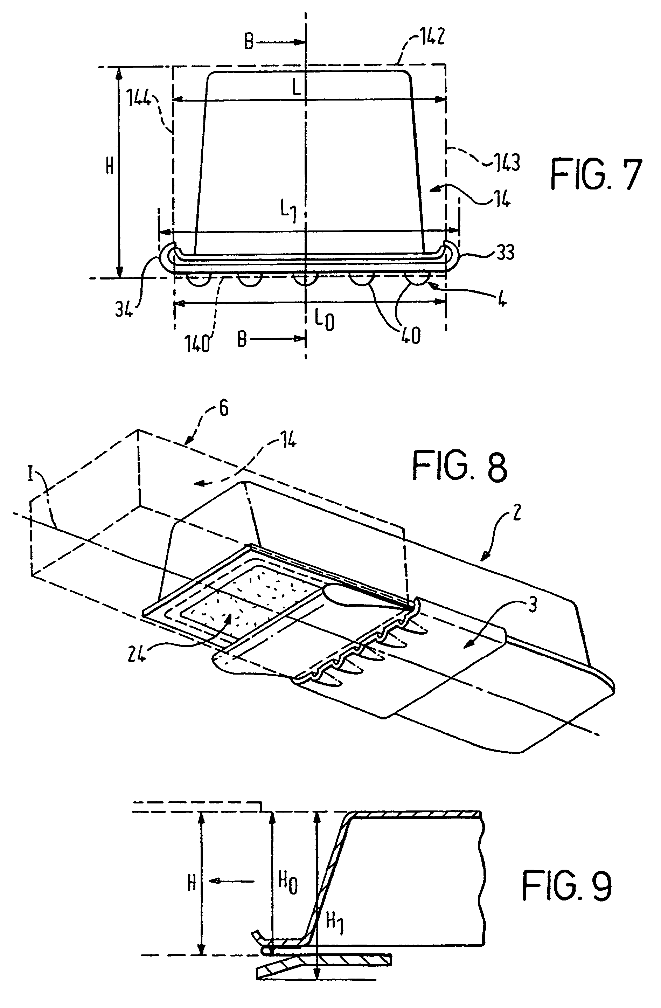

Les figures 7 à 12 montrent l'élément de recharge lors de son introduction dans une zone d'approvisionnement 6 d'un dispositif de dosage et/ou de distribution 1 adapté à cet effet. Une des particularités de l'invention réside dans ce que le moyen de détachement possède des moyens d'accrochage mécanique 4 formés d'au moins une zone de butée s'étendant de manière transversale par rapport à la direction longitudinale de l'élément de recharge correspondant à la direction d'engagement (Fig. 8). Dans l'exemple illustré, les moyens d'accrochage mécaniques comprennent des portions saillantes 40 destinées à prendre appui transversalement contre un bord complémentaire 140 délimitant l'entrée d'un logement 14 de la zone d'approvisionnement 6 du dispositif. Le logement 14 possède un bord supérieur 142 qui définit avec le bord inférieur 140 une hauteur H qui compte tenu des tolérances dimensionnelles autorise l'engagement glissant de l'élément de recharge 2 à l'exception du moyen de détachement 3 qui est maintenu en dehors du logement en raison de la coopération en butée des portions saillantes 40 avec le bord inférieur 140. Ainsi la hauteur H est prévue légèrement supérieure, aux tolérances près, à la hauteur H₀ de l'élément comprenant les bords et la portion de boucle 250 du film de scellage formant une double épaisseur de film comme le montre la figure 9, mais est inférieure à la hauteur H₁ incluant la hauteur hors tout de l'élément y compris l'épaisseur des moyens d'accrochage mécanique.

Avantageusement, les moyens de glissement 33, 34 peuvent aussi former des moyens d'accrochage en prise avec des bords latéraux 143, 144 du logement appartenant au dispositif. Ainsi, il suffit de prévoir que la largeur L₁ du moyen de moyen de détachement excède la largeur L du logement (largeur séparant les bords 143, 144) et que la largeur L₀ séparant les bords de glissement de l'élément de recharge soit inférieure à la largeur L du logement. Une telle disposition a pour avantage de concentrer les efforts sur les côtés de l'élément de recharge ; c'est à dire à proximité des cordons de scellage latéraux, favorisant ainsi le délaminage sans risque de rupture du film.

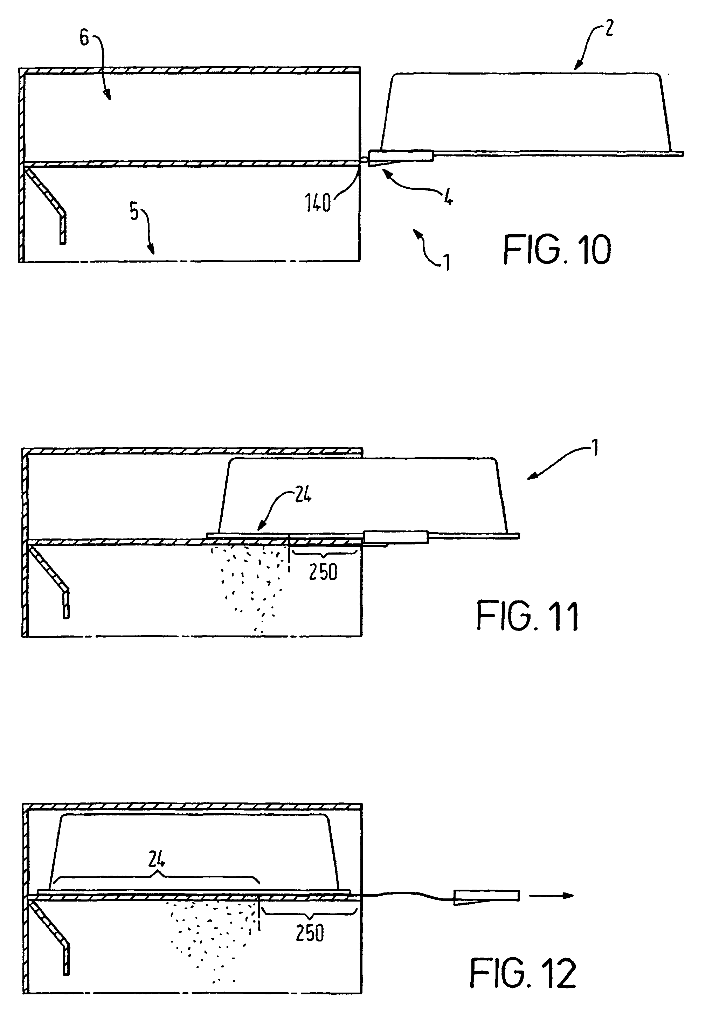

Comme le montrent les figures 10 à 12, l'installation de l'élément de recharge 2 provoquant le déchargement est particulièrement simple et rapide puisque cela consiste à disposer l'élément de recharge à l'entrée du logement, en présentant le bord avant de l'élément comprenant le moyen de détachement en position rabattue sur la surface de scellage (en configuration selon la figure 1), et d'appliquer les moyens d'accrochage 4 en regard du bord correspondant 140 du logement, puis à exercer une force suffisante dans la direction longitudinale de l'élément pour enfoncer l'élément de recharge dans le logement ; la délamination du moyen de scellage s'exerçant ainsi sur les bords de l'élément. Il est à noter qu'au fur et à mesure que la délamination intervient, la substance alimentaire est libérée par gravité dans la zone d'approvisionnement du dispositif, en direction d'un système de dosage 5, par exemple, sans qu'il puisse y avoir un risque de déversement à l'extérieur du dispositif. Le moyen de scellage ou film forme ainsi une portion de repli 250 dont la longueur croit au fur et à mesure de l'introduction de l'élément de recharge dans le logement. Du fait du repliement en boucle du film, la longueur de la portion de repli correspond sensiblement à la moitié de la longueur de l'élément engagée dans le logement de sorte qu'au moment ou le récipient est entièrement introduit dans le logement, le passage 24 du récipient est découvert de moitié environ. A ce moment, la délamination complète jusqu'à obtenir la séparation du moyen de scellage ou film par rapport au récipient est obtenue en tirant manuellement sur le moyen de détachement comme le montre la figure 12.

Un dispositif de distribution de boissons ou sauces adapté à recevoir un tel élément de recharge est décrit de manière détaillée dans la demande EP 1028 068 A1. On pourra donc s'y référer pour comprendre, à titre d'exemple, le principe général de fonctionnement d'un tel dispositif.

Selon une caractéristique de l'invention, le moyen de scellage est de préférence un film souple réalisé dans un matériau résistant au déchirement et à l'humidité. Il peut s'agir soit d'un film plastique monocouche ou multicouche, eventuellement métallisé, soit d'un laminé comprenant une couche d'aluminium doublée intérieurement d'une ou plusieurs couches en matière plastique thermofusible. Pour le café soluble, par exemple, il est préféré un film plastique métallisé qui confère des propriétés d'imperméabilité à la vapeur et aux gaz. La métallisation des films plastiques se fait, en général, en condensant sur la surface du film des vapeurs d'aluminium ou autre metal sous vide. L'opération se fait dans une enceinte étanche où est créé un vide très poussé. La couche de métallisation est très fine de l'ordre de 300 angström. Elle peut être recouverte d'un vernis de protection ou un complexage avec un autre film contrecollé sur la face métal. Dans tous les cas, le film, métallisé ou non, aura une couche interne apte à former un cordon de scellage lors de l'application de pression et de chaleur sur les bords du récipient pour former un cordon thermoscellé.

Quant au récipient, il peut être de formes variées et constitué d'une ou plusieurs pièces séparées puis assemblées entre elles. Cependant, il est préféré une solution de barquette allongée, en une seule pièce, incluant les bords de scellage.

L'élément peut être constitué à base de matière plastique mise en oeuvre selon un procédé de formage choisi parmi ceux-suivants : thermoformage, injection, extrusion-soufflage. Le ou les matériaux formant le récipient peuvent être choisi parmi différents matériaux plastiques appartenant au groupe consistant de : polypropylène (PP), polyéthylène, polystyrène, PVC, acétate de cellulose, EVOH, polyester et polyamides. Le récipient peut être monocouche ou multicouche. Il peut comprendre des films barrières spécifiques à perméabilité faible ou imperméable à la vapeur d'eau et/ou l'oxygène. Il peut aussi comprendre des films ayant des propriétés améliorées au soudage pour favoriser la soudure des bords.

Les différentes solutions suivantes peuvent être données à titre d'exemples préférés :

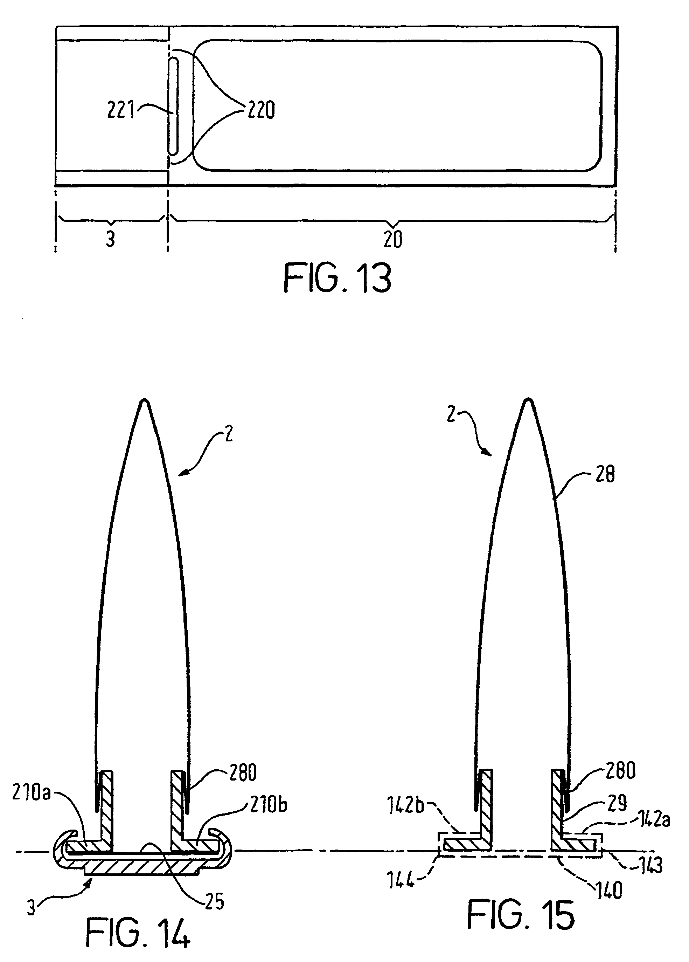

Le récipient 20 et le moyen de détachement 3 sont formés par injection en une pièce comme illustré à la figure 13 puis sont séparés par découpe ou rupture de lignes 220 comme des lignes de faiblesse, par exemple, ménagées entre les deux pièces. Une ouverture 221 peut être prévue entre les deux pièces afin de limiter la longueur des lignes de découpe ou de rupture. Un film de scellage peut être scellé avant la séparation du moyen de détachement et du récipient. Il est préféré un matériau du type PP qui possède une bonne perméabilité à la vapeur d'eau, une bonne soudabilité et est relativement bon marché. En revanche le polypropylène seul est relativement poreux à l'oxygène et ne convient pas pour des produits alimentaires sensibles à l'oxydation comme le lait en poudre. Une telle solution est aussi économique de fait de l'emploi d'un seul moule pour fabriquer deux pièces séparables par cassure ou découpe.

Dans une variante possible, le récipient est formé par thermoformage d'une monocouche telle qu'en PP ou multicouche telle qu'en PP/EVOH/PP. La glissière est formée par injection en PP ou un autre matériau plastique approprié tel que polystyrène, polyéthylène, etc. Le thermoformage du récipient a pour avantage d'être économique et de pouvoir réaliser un récipient à base de feuilles plastiques multicouches incorporant une ou plusieurs couches barrières telle que l'EVOH qui est barrière à l'oxygène. Le thermoformage ne permet pas toutefois d'obtenir une seule pièce comprenant le récipient et le moyen de détachement dans la mesure où ce dernier possède des zones de pliage ou déformation opposées par rapport à la direction de formage (en l'occurrence, les portions recourbées vers le haut alors que le formage de la barquette s'oriente vers le bas).

Dans une autre variante encore, le récipient et le moyen de détachement sont formés séparément par injection plastique comme en PP. L'avantage de l'injection du récipient par rapport au thermoformage provient de la possibilité d'injecter des bords de manière précise et aux formes voulues sans formation de chute. Il convient aussi pour rigidifier le récipient et éviter le flambage après scellage du film. L'aspect est aussi amélioré.

Les figures 14 et 15 illustrent une variante de l'invention dans laquelle l'élément de recharge 2 comprend un récipient formé d'une poche souple 28 et d'un embout relativement plus rigide 29 lequel est attaché à la poche souple par des moyens de connexion 280 appropriés tels que soudure, adhésion par adhésif ou autres. L'embout est muni à sa base de bords de scellage, de manière similaire à ce qui a été précédemment décrit, sur lesquels est monté un moyen de détachement 3 adapté à glisser le long des bords latéraux 210a, 210b. La figure 15 montre la base de l'embout en prise avec un moyen de guidage du logement du dispositif dans lequel l'élément de recharge est destiné à venir se loger. Le moyen de guidage est formé d'un bord inférieur 140, de bords latéraux 143, 144 et de bords supérieurs 142a, 142b, le tout formant un rail destiné à guider les bords latéraux 210a, 210b de l'embout selon un plan de guidage P de la zone d'approvisionnement. Les dimensions du moyen de guidage sont prévues inférieures aux dimensions du moyen de détachement 3, de sorte que l'introduction de l'embout dans le moyen de guidage provoque l'arrêt du moyen de détachement à l'entrée du moyen de guidage et par conséquent la délamination du film de scellage obturant l'ouverture du récipient. Un élément de recharge sous forme d'une poche souple et d'un embout scellé ainsi qu'un dispositif destiné à recevoir un tel élément sont décrits en détail dans la demande de brevet US/SN 09/518661.

L'élément de l'invention convient pour stocker des substances alimentaires employées pour recharger différents types de dispositifs de distribution, préparation et/ou dosage de produits alimentaires élaborés à partir de ces substances. Les substances alimentaires visées sont essentiellement des substances pulvérulentes entrant dans la composition de boissons. De telles substances sont préférentiellement choisies parmi le café torréfié et moulu, le café soluble, le thé, le lait, chocolat, la chicorée, les végétaux ou légumes et arômes naturels ou artificiels ainsi que les mélanges en toute proportion de ces produits.

## Revendications

1. Elément de recharge en substance alimentaire (2) destiné à être inséré dans une zone d'approvisionnement en substance d'un dispositif de dosage, de distribution et/ou de préparation de produits alimentaires ; l'élément de recharge comprenant un récipient (20) pour contenir une quantité de substance alimentaire ; un passage (24) pour libérer la substance ; des bords (21) de l'élément de recharge dont au moins une paire de premiers bords opposés (210a, 210b) s'étendant selon une direction longitudinale I correspondant à la direction d'engagement de l'élément de recharge dans le dispositif de dosage, un moyen de scellage (25) scellé sur les bords (21) du passage pour former une enceinte close (26) ; un moyen de détachement (3) du moyen de scellage ; ledit moyen de détachement comprenant au moins un moyen d'accrochage (4) destiné à s'engager sur un moyen de retenue du dispositif lors de l'engagement de l'élément de recharge dans le dispositif ; le moyen de détachement (3) étant solidaire d'une portion libre du moyen de scellage (25) ; **caractérisé en ce que** le moyen de détachement (3) comprend des moyens de connexion (33, 34) avec lesdits premiers bords (210a, 210b) et est ainsi apte à être connecté à l'élément de recharge de façon à être déplaçable en glissement le long desdits premiers bords et provoquer l'ouverture, au moins partielle, du moyen de scellage (25) en réponse à l'engagement de l'élément de recharge dans le dispositif.

2. Elément de recharge selon la revendication 1, **caractérisé en ce que** le moyen d'accrochage (4) associé au moyen de détachement est arrangé de manière à former au moins une zone de butée s'étendant de manière transversale par rapport à la direction longitudinale (I) de l'élément de recharge.

3. Elément de recharge selon la revendication 1, **caractérisé en ce que**, le moyen de détachement (3) comprend des moyens de connexion (33, 34) avec les bords premiers opposés (210a, 210b) qui sont flexibles, de façon ce que le moyen de détachement puisse être disposé entre une position désengagée et une position de connexion dans laquelle une portion (250) du moyen de scellage est rabattue, formant ainsi la position d'engagement en glissement le long des premiers bords opposés (210a, 210b).

4. Elément de recharge selon la revendication 3, **caractérisé en ce que** les moyens de connexion (33, 34) comprennent des extrémités recourbées du moyen de détachement (3) permettant le repliement en position d'engagement le long des premiers bords (210a, 210b) par déformation élastique lors de l'application d'une force sur lesdites extrémités.

5. Elément de recharge selon la revendication 3, **caractérisé en ce qu'**il comprend une paire de second bords opposé (211a, 211b) et **en ce que** le moyen de scellage est un film souple assemblé sur les premiers et seconds bords (21, 210a, 210b, 211a, 211b) de l'élément par un cordon de scellage (27) de sorte que le détachement du moyen de scellage s'opère par délamination d'une portion au moins du cordon de scellage sur les premiers et seconds bords du récipient.

6. Elément de recharge selon la revendication 5, **caractérisé en ce que** les seconds bords comprennent un bord avant (211a) adjacent par rapport à la portion libre du moyen de scellage lequel est muni d'une portion de scellage ayant une forme non-linéaire formant un apex dirigé vers la portion libre.

7. Elément de recharge selon la revendication 6, **caractérisé en ce que** ladite portion de scellage est sensiblement en forme de V ou U renversé.

8. Elément de recharge selon l'une quelconque des revendications précédentes,
**caractérisé en ce que** le récipient a la forme d'une barquette allongée et **en ce que** les bords font partie intégrante de la barquette.

9. Elément de recharge selon l'une quelconque des revendications 1 à 7, **caractérisé en ce que** le récipient comprend une poche souple (28) se prolongeant par un embout (29) sensiblement rigide comprenant les bords de scellage (210a, 210b).

10. Ensemble comprenant un dispositif de dosage, de distribution et/ou de préparation de boissons (1) comprenant une zone d'approvisionnement (6) et au moins un élément de recharge (2) en substance alimentaire destiné à prendre position dans ladite zone (6) ; l'élément comprenant un récipient (20) contenant la substance alimentaire et un film (25) apte à former le fond de l'élément, le film (25) étant assemblé de manière délaminable sur les bords (21) du récipient comprenant des premiers bords (210a, 210b) s'étendant selon une direction longitudinale I correspondant à la direction d'engagement de l'élément de recharge dans la zone (6), le film comprenant une portion libre solidaire d'un moyen de détachement (3) ; ledit moyen de détachement comprenant au moins un moyen d'accrochage mécanique (4, 40, 33, 34) ;
la zone d'approvisionnement (6) comprenant un logement (14) de réception de l'élément (2) et au moins un moyen de retenue (140, 142, 142a, 142b, 143, 144) qui coopère avec le/les moyen(s) d'accrochage (4, 40, 33, 34) au moment de l'introduction de l'élément dans le logement ; **caractérisé en ce que**,
le moyen de détachement (3) comprend des moyens de connexion (33, 34) permettant la connexion du moyen de détachement (3) de manière glissante par rapport aux premiers bords (210a, 210b) de l'élément et **en ce que** le moyen de détachement est apte à coulisser le long des premiers bords (210a, 210b) de sorte que le mouvement d'introduction provoque la délamination au moins partielle du film (25) et libère la substance dans la zone d'approvisionnement (6).

## Patentansprüche

1. Nachfüllelement (2) für eine Nahrungsmittelsubstanz, das dazu bestimmt ist, in eine Substanzversorgungszone einer Vorrichtung zur Zudosierung, Abgabe und/oder Zubereitung von Nahrungsmittelprodukten eingeführt zu werden, und das einen Behälter (20) zur Aufnahme einer Menge an Nahrungsmittelsubstanz, einen Durchgang (24) zur Freigabe der Substanz, Ränder (21) des Nachfüllelements, von denen mindestens ein Paar von ersten einander gegenüberstehenden Rändern (210a, 210b) sich in einer der Richtung der Einführung des Nachfüllelements in die Zudosiervorrichtung entsprechenden Längsrichtung I erstreckt, ein Versiegelungsmittel (25), das auf den Rändern (21) des Durchgangs durch Siegelung befestigt ist, um eine geschlossene Kammer (26) zu bilden, und ein zum Ablösen des Versiegelungsmittels dienendes Mittel (3) aufweist, das mindestens ein Einhakmittel (4) umfaßt, das dazu bestimmt ist, bei der Einführung des Nachfüllelements in die Vorrichtung auf ein Rückhaltemittel der Vorrichtung zu gelangen, wobei das Ablösemittel (3) mit einem freien Teil des Versiegelungsmittels (25) fest verbunden ist, **dadurch gekennzeichnet, daß** das Ablösemittel (3) Mittel (33, 34) zur Verbindung mit den ersten Rändern (210a, 210b) aufweist und auf diese Weise mit dem Nachfüllelement so verbunden werden kann, daß es durch Gleiten längs der ersten Ränder beweglich ist und als Antwort auf die Einführung des Nachfüllelements in die Vorrichtung die mindestens partielle Öffnung des Versiegelungsmittels (25) bewirkt.

2. Nachfüllelement nach Anspruch 1, **dadurch gekennzeichnet, daß** das dem Ablösemittel zugeordnete Einhakmittel (4) so ausgebildet ist, daß es mindestens einen Anschlagsbereich bildet, der sich quer zur Längsrichtung (I) des Nachfüllelements erstreckt.

3. Nachfüllelement nach Anspruch 1, **dadurch gekennzeichnet, daß** das Ablösemittel (3) Mittel (33, 34) zur Verbindung mit den ersten einander gegenüberliegenden Rändern (210a, 210b) aufweist, die so flexibel sind, daß das Ablösemittel zwischen einer uneingeführten Stellung und einer Verbindungsstellung angeordnet sein kann, in der ein Teil (250) des Versiegelungsmittels umgeklappt ist, was die Stellung der Einführung durch Gleiten längs der einander gegenüberliegenden Ränder (210a, 210b) bildet.

4. Nachfüllelement nach Anspruch 3, **dadurch gekennzeichnet, daß** die Verbindungsmittel (33, 34) umgebogene Enden des Ablösemittels (3) umfassen, die bei Anlegen einer Kraft an diese Enden das Umbiegen in die Stellung des Einschubs längs der ersten Ränder (210a, 210b) durch elastische Verformung gestatten.

5. Nachfüllelement nach Anspruch 3, **dadurch gekennzeichnet, daß** es ein Paar von zweiten einander gegenüberliegenden Rändern (211a, 211b) aufweist und daß das Versiegelungsmittel eine biegsame Folie ist, die mit den ersten und zweiten Rändern (21, 210a, 210b, 211a, 211b) des Elements durch eine Versiegelungsraupe (27) verbunden ist, so daß das Ablösen des Versiegelungsmittels durch Abziehen mindestens eines Teils der Versiegelungsraupe auf den ersten und zweiten Rändern des Behälters vor sich geht.

6. Nachfüllelement nach Anspruch 5, **dadurch gekennzeichnet, daß** die zweiten Rändern einen vorderen Rand (211a) umfassen, der dem freien Teil des Versiegelungsmittels benachbart ist und der mit einem Versiegelungsteil versehen ist, der eine nicht-lineare Form hat, die einen auf den freien Teil zu gerichteten Scheitelpunkt bildet.

7. Nachfüllelement nach Anspruch 6, **dadurch gekennzeichnet, daß** der Versiegelungsteil im wesentlichen die Form eines umgekehrten V oder U hat.

8. Nachfüllelement nach einem der vorhergehenden Ansprüche, **dadurch gekennzeichnet, daß** der Behälter die Form einer langgestreckten Schale hat und daß die Ränder einen integrierenden Teil der Schale bilden.

9. Nachfüllelement nach einem der Ansprüche 1 bis 7, **dadurch gekennzeichnet, daß** der Behälter einen biegsamen Beutel (28) umfaßt, der durch einen im wesentlichen starren Ansatz (29) verlängert ist, der die Versiegelunsränder (210a, 210b) aufweist.

10. Einheit, umfassend eine Vorrichtung (1) zum Zudosieren, Abgeben und/oder Zubereiten eines Getränks, die eine Versorgungszone (6) und mindestens ein Nachfüllelement (2) für Nahrungsmittelsubstanz aufweist, das dazu bestimmt ist, in dieser Zone (6) positioniert zu werden, wobei das Element einen die Nahrungsmittelsubstanz enthaltenden Behälter (20) und eine Folie (25) umfaßt, die den Boden des Elements bilden kann, wobei die Folie (25) an den Rändern (21) des Behälters abziehbar angefügt ist, die erste Ränder (210a, 210b) umfassen, die sich in einer Längsrichtung I erstrecken, die der Richtung der Einführung des Nachfüllelements in die Zone (6) entspricht, wobei die Folie einen freien Teil aufweist, der mit einem Ablösemittel (3) fest verbunden ist, das mindestens ein mechanisches Einhakmittel (4, 40, 33, 34) aufweist, wobei die Versorgungszone (6) eine Kammer (14) zur Aufnahme des Elements (2) und mindestens ein Rückhaltemittel (140, 142, 142a, 142b, 143, 144) aufweist, das bei der Einführung des Elements in die Kammer mit dem/den Einhakmitteln (4, 40, 33, 34) zusammenwirkt, **dadurch gekennzeichnet, daß** das Ablösemittel (3) Verbindungsmittel (33, 34) aufweist, die die Verbindung des Ablösemittels (3) bezüglich der ersten Ränder (210a, 210b) des Elements gleitend gestattet, und daß das Ablösemittel längs der ersten Ränder (210a, 210b) so gleiten kann, daß die Einführungsbewegung das mindestens partielle Abziehen der Folie (25) bewirkt und die Substanz in die Versorgungszone (6) freigibt.

## Claims

1. Foodstuff refill (2) intended to be inserted in a foodstuff supply zone of a device for metering, dispensing and/or preparing food products; the refill comprising a container (20) for containing a quantity of foodstuff; a passage (24) for releasing the foodstuff; edges (21) of the refill, including at least one pair of first opposite edges (210a, 210b) extending in a longitudinal direction I corresponding to the direction in which the refill is engaged in the metering device, a sealing means (25) sealed over the edges (21) of the passage to form an enclosed space (26); a means (3) for detaching the sealing means; the said detaching means comprising at least one catching means (4) intended to engage on a retaining means of the device when the refill is being engaged in the device; the detaching means (3) being secured to a free portion of the sealing means (25); **characterised in that** the detaching means (3) comprises means (33, 34) for connection to the said first edges (210a, 210b) and is thus able to be connected to the refill in such a way as to be displaceable by sliding along the said first edges and cause the at least partial opening of the sealing means (25) in response to the engagement of the refill in the device.

2. Refill according to Claim 1, **characterised in that** the catching means (4) associated with the detaching means is arranged in such a way as to form at least one abutment zone extending transversely with respect to the longitudinal direction (I) of the refill.

3. Refill according to Claim 1, **characterised in that** the detaching means (3) comprises means (33, 34) for connection to the first opposite edges (210a, 210b) which are flexible so that the detaching means can be arranged between a disengaged position and a connection position in which a portion (250) of the sealing means is folded back, thus forming the position of engagement by sliding along the first opposite edges (210a, 210b).

4. Refill according to Claim 3, **characterised in that** the connecting means (33, 34) comprise curved ends of the detaching means (3) which allow folding back into the position of engagement along the first edges (210a, 210b) by elastic deformation when a force is applied to the said ends.

5. Refill according to Claim 3, **characterised in that** it comprises a pair of second opposite edges (211a, 211b), and **in that** the sealing means is a flexible film joined to the first and second edges (21, 210a, 210b, 211a, 211b) of the refill by a sealing line (27) so that the sealing means is detached by delaminating at least a portion of the sealing line on the first and second edges of the container.

6. Refill according to Claim 5, **characterised in that** the second edges comprise a front edge (211a) adjacent to the free portion of the sealing means which is equipped with a sealing portion of non-linear shape forming an apex pointing towards the free portion.

7. Refill according to Claim 6, **characterised in that** the said sealing portion is substantially in the shape of an inverted V or U.

8. Refill according to any one of the preceding claims, **characterised in that** the container has the shape of an elongate tray and **in that** the edges form an integral part of the tray.

9. Refill according to any one of Claims 1 to 7, **characterised in that** the container comprises a flexible pouch (28) extended by a substantially rigid end piece (29) comprising the sealing edges (210a, 210b).

10. Assembly comprising a device for metering, dispensing and/or preparing beverages (1) which comprises a supply zone (6) and at least one foodstuff refill (2) intended to take up position in the said zone (6); the refill comprising a container (20) containing the foodstuff and a film (25) capable of forming the bottom of the refill, the film (25) being joined in such a way that it can be delaminated to the edges (21) of the container comprising first edges (210a, 210b) extending in a longitudinal direction I corresponding to the direction in which the refill is engaged in the zone (6), the film comprising a free portion secured to a detaching means (3); the said detaching means comprising at least one mechanical catching means (4, 40, 33, 34);
the supply zone (6) comprising a housing (14) for receiving the refill (2) and at least one retaining means (140, 142, 142a, 142b, 143, 144) which cooperates with the catching means (4, 40, 33, 34) at the time of introduction of the refill into the housing; **characterised in that** the detaching means (3) comprises connecting means (33, 34) allowing the connection of the detaching means (3) in a sliding manner with respect to the first edges (210a, 210b) of the refill, and **in that** the detaching means is capable of sliding along the first edges (210a, 210b) in such a way that the introduction movement causes the at least partial delamination of the film (25) and releases the foodstuff into the supply zone (6).
